# DEMANDE DE BREVET EUROPEEN

(11) **EP 4 420 927 A1**
(43) Date de publication de la demande: **28.08.2024**
(21) Numéro de dépôt: 24155620.8
(22) Date de dépôt: 02.02.2024
(51) Int. Cl.: B60N 2/14, B60N 2/02

(54) **ENSEMBLE POUR SIEGE DE VEHICULE**

(30) Priorité: 27.02.2023 FR 2301798
(71) Demandeur: FAURECIA Sièges d'Automobile, 92000 Nanterre (FR)
(72) Inventeur: TOUZET, Bertrand, 31718 POLLHAGEN (DE); GAROTTE, Gérald, 61220 BELLOU EN HOULME (FR)
(74) Mandataire: Plasseraud IP

(57) **Abrégé**

Ensemble de pivotement (18) pour siège (10) de véhicule comprenant un plateau inférieur (30) comprenant au moins un premier trou (32) ; un plateau supérieur (20) monté pivotant par rapport au plateau inférieur (30) autour d'un premier axe (A1) et comprenant au moins un deuxième trou (22) ; un logement (28) délimité dans la direction du premier axe (A1) par le plateau supérieur (20) et le plateau inférieur (30) ; au moins un faisceau électrique (50) qui comporte au moins un câble électrique, le faisceau électrique (50) s'étendant au travers dudit au moins un premier trou (32) du plateau inférieur (30) et au travers dudit au moins un deuxième trou (22) du plateau supérieur (20), une portion intermédiaire (52) du câble électrique étant reçue dans ledit logement, ladite portion intermédiaire (52) formant au moins une boucle autour du premier axe (A1).

## Description

### Domaine technique

La présente description se rapporte à un ensemble pour siège de véhicule, notamment à fonction de pivotement vertical. La présente description se rapporte également à un siège comprenant un tel ensemble.

### Technique antérieure

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontal », « vertical », etc., il est fait référence, sauf précision contraire, à l'orientation des figures ou du siège 10 dans sa position normale d'utilisation.

Dans la suite, la direction longitudinale X s'entend de la direction longitudinale X du siège 10. La direction longitudinale X du siège 10 est considérée être la même que la direction longitudinale X du véhicule automobile dans lequel le siège 10 est monté. Cette direction longitudinale X correspond à la direction normale d'avancement FW du véhicule. La direction longitudinale X est de préférence horizontale. La direction transversale Y est la direction transversale Y du siège 10. La direction transversale Y du siège 10 correspond ainsi à la direction transversale Y ou latérale du véhicule automobile. Cette direction transversale Y correspond à une direction perpendiculaire à la direction normale d'avancement du véhicule. La direction transversale Y est de préférence horizontale. Enfin, la direction verticale Z est la direction perpendiculaire à la direction à la direction longitudinale et la direction transversale Y. La direction verticale Z coïncide avec la direction du champ de pesanteur terrestre.

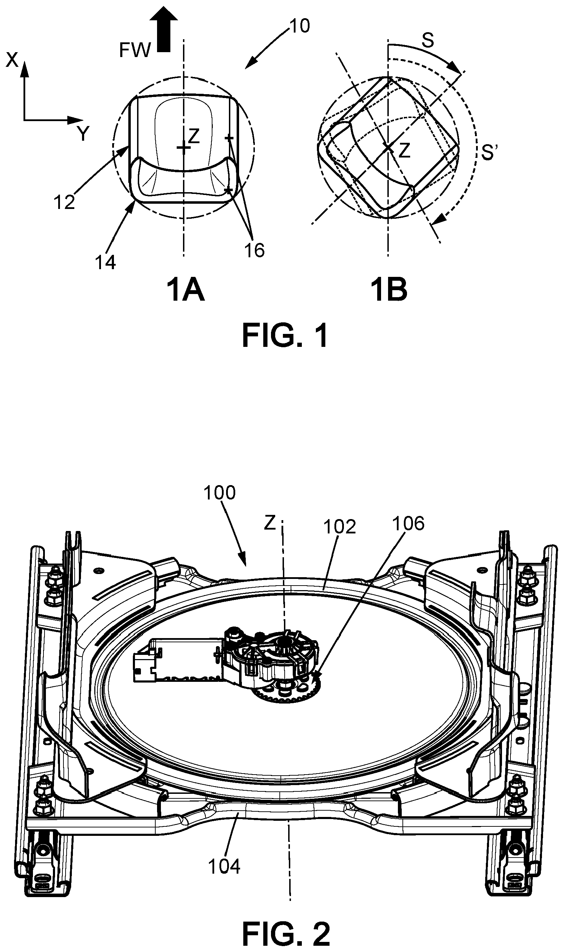

Dans les véhicules de transport, il a déjà été proposé de pouvoir faire pivoter un siège 10 passager pour obtenir une configuration de type salon, c'est-à-dire au moins un siège 10 orienté en position autre que vers l'avant (représenté par les flèches S et S' à la figure 1b). Il a déjà été proposé également d'utiliser un mouvement à pivotement vertical pour faciliter l'entrée et la sortie de passager(s) dans un véhicule lorsqu'un accès large conventionnel par la porte n'est pas disponible.

De plus, dans le contexte des situations de délégation de conduite plus ou moins avancées utilisant des fonctions de conduite autonome du véhicule, non seulement les passagers, mais aussi le conducteur peuvent être amenés à préférer une position du siège 10 qui n'est pas orientée directement face à la route, et des orientations de siège 10 variées et très différentes peuvent prévaloir à l'intérieur de l'habitacle.

Comme représenté à la figure 2, il est ainsi connu un siège 10 pour véhicule, avec une fonction de pivotement à axe vertical, dont l'ensemble de pivotement 100 comprend une embase 104 configurée pour être reliée au plancher du véhicule directement ou via des glissières longitudinales, et une couronne tournante 102 montée sur l'embase par l'intermédiaire d'un mécanisme d'articulation 106, interposé entre l'embase et la couronne tournante. Le siège 10 comprend en outre une armature d'assise 12 de siège 10 reliée à la couronne tournante 102.

Il est également connu que le siège 10 puisse comprendre un ou plusieurs dispositifs de commande 16 pour commander chacun un dispositif fonctionnel associé à une fonctionnalité, par exemple le réglage de l'inclinaison d'un dossier 14 du siège 10 par rapport à l'assise 12, une fonction de massage, l'ouverture et/ou la fermeture d'une fenêtre du véhicule dans lequel le siège 10 se situe, allumer et/ou éteindre une lumière du véhicule dans lequel se situe le siège 10, etc. Le (ou les) dispositif(s) de commande 16 peuvent être directement embarqués dans le siège 10, par exemple accessibles au niveau d'une garniture d'assise 12, d'une garniture de dossier 14 ou d'un accoudoir. A cet effet, il nécessaire de prévoir une connexion électrique entre chaque dispositif de commande 16 et le dispositif fonctionnel correspondant, voire avec un ordinateur de bord du véhicule. Par ailleurs, il est aussi nécessaire de prévoir une connexion électrique avec un organe d'alimentation électrique, tel qu'une batterie électrique, pour chaque dispositif fonctionnel et pour certains, voir l'ensemble, des dispositifs de commande.

Ces connexions électriques sont effectuées au moyen de plusieurs câbles électriques. Un faisceau de câbles électriques s'étend ainsi entre le plancher du véhicule et l'armature du siège 10. Toutefois, dans le cas d'un siège 10 à fonction de pivotement vertical, l'ensemble de pivotement 100 constitue un obstacle au passage de faisceau électrique. De plus, le pivotement du siège 10 entraine un cisaillement et/ou une torsion des câbles électriques qui peuvent conduire à leur endommagement, voire à une rupture.

### Résumé

Selon un premier aspect, il est proposé un ensemble de pivotement pour siège de véhicule comprenant :
- Un plateau inférieur configuré pour être relié à un plancher de véhicule, le plateau inférieur comprenant au moins un premier trou ;
- un plateau supérieur monté pivotant par rapport au plateau inférieur autour d'un premier axe, le plateau supérieur comprenant au moins un deuxième trou,
- un logement délimité dans la direction du premier axe par le plateau supérieur et le plateau inférieur ;
- au moins un faisceau électrique qui comporte au moins un câble électrique, le faisceau électrique s'étendant au travers dudit au moins un premier trou du plateau inférieur et au travers dudit au moins un deuxième trou du plateau supérieur, une portion intermédiaire du câble électrique étant reçue dans ledit logement, ladite portion intermédiaire formant au moins une boucle autour du premier axe, ledit plateau inférieur étant configuré pour soutenir ladite au moins une boucle.

L'enroulement de la portion intermédiaire du faisceau électrique autour du premier axe permet d'éviter un cisaillement du faisceau électrique lors de la rotation du plateau supérieur autour du premier axe par rapport au plateau inférieur. En effet, lors de la rotation du plateau supérieur autour du premier axe par rapport au plateau inférieur, le faisceau électrique peut s'enrouler ou se dérouler selon le sens de rotation du plateau supérieur, évitant ainsi un effet de cisaillement sur celui-ci, et notamment sur chacun des câbles électriques qu'il comprend. Une usure prématurée ou un endommagement du faisceau électrique est ainsi évité.

Le fait que la portion intermédiaire de faisceau électrique soit reçue dans le logement permet de maintenir l'enroulement du faisceau électrique autour du premier axe. Aussi, de manière remarquable, le logement recevant la portion intermédiaire du faisceau électrique est obtenu en rapportant directement le plateau supérieur au plateau inférieur. Autrement dit, le montage de ladite au moins une boucle du faisceau électrique peut être directement obtenue en assemblant uniquement deux éléments que sont le plateau supérieur et le plateau inférieur. Un tel ensemble de pivotement est donc avantageusement rapide et facile à assembler.

La direction du premier axe peut coïncider avec la direction verticale.

Les qualificatifs d'orientation « radial » ou « circonférentiel » sont définis sauf précision contraire par référence au premier axe. Une direction radiale est une direction perpendiculaire à la direction du premier axe. Une direction circonférentielle, en un point éloigné du premier axe, correspond à une direction perpendiculaire aux directions du premier axe et radiale. Par ailleurs, sauf précision contraire, les adjectifs « intérieur », « interne », «extérieur» et « externe » sont utilisés en référence à une direction radiale de sorte que la partie intérieure/interne, i.e. radialement intérieure/interne, d'un élément est plus proche du premier axe que la partie extérieure/externe, i.e. radialement extérieure/externe, du même élément.

Le plateau inférieur peut être configuré pour être relié directement au plancher de véhicule ou par l'intermédiaire d'un mécanisme de glissières adapté pour déplacer le siège selon une direction longitudinale.

Le faisceau électrique peut comprendre une gaine dans laquelle est reçue ledit au moins un câble électrique. Ledit au moins un câble électrique peut être isolé.

Le pivotement du plateau supérieur autour du premier axe par rapport au plateau inférieur est au moins égal à 90°, de préférence au moins égale à 180°, et de manière encore plus préférée au moins égale 360° ; dans certaines configurations on peut obtenir une solution multitours.

Le plateau inférieur et/ou le plateau supérieur peuvent être chacun venus de matière, i.e. monoblocs.

La portion intermédiaire peut former entre 1 et 3 boucles autour du premier axe. Le faisceau électrique peut présenter un diamètre de 10 mm. Le faisceau électrique peut présenter un diamètre inférieur ou égal à 20 mm.

Une première portion d'extrémité du faisceau peut être située en dessous du plateau inférieur. La première portion d'extrémité peut déboucher du premier trou, notamment vers le bas. Une seconde portion d'extrémité du faisceau électrique peut être située au-dessus du plateau supérieur. La seconde portion d'extrémité peut déboucher du deuxième trou, notamment vers le haut.

Ledit au moins un premier trou et ledit au moins un deuxième trou peuvent être chacun disposés à distance du premier axe.

La première portion d'extrémité et la seconde portion d'extrémité sont ainsi à distance du premier axe. Cela permet d'éviter une torsion du faisceau électrique lors de la rotation du plateau supérieur autour du premier axe par rapport au plateau inférieur. Autrement dit, excentrer la première portion d'extrémité et la seconde portion d'extrémité du premier axe permet de s'assurer que le faisceau ne pas vrille sur lui-même, en particulier à partir de la première portion d'extrémité et de la seconde portion d'extrémité.

Autrement dit, la première portion d'extrémité et la seconde portion d'extrémité peuvent chacune être excentrées du premier axe.

Le faisceau électrique peut être fixé à un bord latéral du premier trou et/ou à un bord latéral du second trou.

Il a été constaté que cela facilite l'enroulement et le déroulement du faisceau autour du premier lors d'une rotation importante du plateau supérieur par rapport au plateau inférieur.

Il peut être prévu un ou plusieurs connecteur(s) de faisceau électrique raccordé(s) au faisceau électrique. Un connecteur de faisceau électrique peut présenter des dimensions inférieures ou égales à 115mm x 60 mm x 25 mm. Ledit au moins un premier trou et ledit au moins un deuxième trou peuvent être dimensionnés pour permettre le passage d'un connecteur de faisceau électrique.

L'ensemble de pivotement peut comprendre au moins un mécanisme d'articulation interposé entre le plateau inférieur et le plateau supérieur et par l'intermédiaire duquel le plateau supérieur est monté pivotant par rapport au plateau inférieur autour du premier axe, le mécanisme d'articulation étant agencé entre le plateau inférieur et le plateau supérieur suivant la direction du premier axe au niveau d'une zone centrale qui est centrée sur le premier axe, ladite au moins une boucle de la portion intermédiaire du faisceau électrique étant enroulée autour du mécanisme d'articulation.

L'agencement du mécanisme d'articulation dans la zone centrale du logement permet d'obtenir un siège plus compact. Par ailleurs, un tel agencement s'avère plus robuste.

Le logement peut être annulaire autour du premier axe. Le mécanisme d'articulation peut être situé au centre dudit logement. Le mécanisme peut délimiter radialement à l'intérieur ledit logement.

Le mécanisme d'articulation peut être configuré pour bloquer le pivotement du plateau supérieur autour du premier axe par rapport au plateau inférieur.

Le mécanisme d'articulation peut être intégralement compris dans un cylindre. Le cylindre contenant le mécanisme d'articulation peut être de révolution autour du premier axe ayant un diamètre inférieur à 120 mm, de préférence un diamètre inférieur à 100mm, voire inférieur à 80mm.

Le mécanisme d'articulation peut être du type continu ou discontinu. Le mécanisme d'articulation peut comprendre un premier flasque et un deuxième flasque. Le premier flasque du mécanisme d'articulation peut être solidaire du plateau inférieur et le deuxième flasque du mécanisme d'articulation peut être est solidaire du plateau supérieur.

Le mécanisme d'articulation peut être de type discontinu. Le mécanisme d'articulation peut être de type discontinu à grains dentés de verrouillage. Le mécanisme d'articulation peut alors être non motorisé. L'ensemble de pivotement peut comprendre une manette de commande de déverrouillage destiné à être manoeuvrée par un utilisateur du siège. Ceci forme une solution peu onéreuse et fiable pour proposer un siège à fonction de pivotement vertical. Le premier flasque peut comprendre une première couronne dentée et le deuxième flasque peut comprendre des guides aptes à recevoir et à guider des grains de verrouillage. Les grains de verrouillage peuvent présentés chacun une denture qui se trouve en prise avec la première couronne dentée dans un état de repos du mécanisme d'articulation et qui se trouve éloignée de la première couronne dentée dans un état activé déverrouillé du mécanisme d'articulation.

Le mécanisme d'articulation peut être de type continu hypocycloïdal à came excentrique. L'ensemble de pivotement peut comprendre un moteur électrique relié à la came excentrique et configuré pour sélectivement mettre en rotation la came excentrique. Un tel mécanisme d'articulation hypocycloïde s'avère bon marché, car ils sont produits en grande quantité pour les articulations de dossier à réglage motorisé.

Le moteur peut être positionné en dessous du plateau inférieur. Le moteur peut être positionné en dessous du mécanisme d'articulation. Le moteur peut être solidaire du plateau inférieur. Moyennant quoi, on peut avoir une épaisseur d'assise modérée, le moteur se trouvant dans une zone technique sous le mécanisme d'articulation. Un arbre de sortie du moteur peut être centré sur le premier axe.

Selon une disposition particulière, le premier flasque peut comprendre une première couronne dentée laquelle comprenant des premières dents et le deuxième flasque peut comprendre une deuxième couronne dentée laquelle comprenant des deuxièmes dents. La première couronne dentée et la deuxième couronne dentée peuvent en permanence engrener l'une avec l'autre sur au moins un secteur angulaire sous l'effet de la came excentrique de commande. Les première et deuxième couronnes dentées peuvent ainsi former une interface hypocycloïdale, selon laquelle le centre de la deuxième couronne tournante est déplacé par rapport au centre de la première couronne dentée lorsque la came de commande tourne.

Selon une disposition particulière, il peut être prévu une transmission à principe de joint de Oldham pour rattraper l'effet excentrique engendré par le mécanisme d'articulation à hypocycloïde à came excentrique, la transmission à principe de joint de Oldham étant interposée entre le mécanisme d'articulation et le plateau supérieur.

Avantageusement, le mécanisme d'articulation peut être non réversible, à savoir un couple important exercé entre les premiers et deuxièmes flasques ne peut pas engendrer un mouvement relatif du premier flasque par rapport au deuxième flasque, en l'absence de rotation de la came excentrique provoquée par la rotation du moteur. Ainsi, lorsque le moteur n'est pas commandé, même si un couple est exercé sur le siège, il ne se produit pas de pivotement du siège.

L'articulation par le mécanisme d'articulation continu ou discontinu tel que décrit ci-avant est dite à un seul étage par différence à une articulation à double étage telle que décrite ci-après.

Selon l'alternative d'une articulation à double étage, il peut être prévu un premier étage d'articulation et un deuxième étage d'articulation comprenant respectivement un premier mécanisme d'articulation et deuxième mécanisme d'articulation 40b), chacun étant de type continu hypocycloïdal tel que décrit ci-avant.

Le premier mécanisme d'articulation et le deuxième mécanisme d'articulation peuvent être agencés en série. Le deuxième flasque du premier mécanisme d'articulation peut être solidaire du premier flasque du deuxième mécanisme d'articulation. Aussi, le premier flasque du premier mécanisme d'articulation peut être solidaire du plateau inférieur et le deuxième flasque du deuxième mécanisme d'articulation peut être solidaire du plateau supérieur.

Le deuxième mécanisme d'articulation peut être configuré pour rattraper l'effet excentrique du premier mécanisme d'articulation. En d'autres termes, l'effet excentrique du deuxième mécanisme d'articulation est déphasé de 180° autour du premier A1 par rapport à l'effet excentrique du premier mécanisme d'articulation. Moyennant quoi, le siège peut tourner selon un mouvement parfaitement circulaire sans effet parasite excentrique ou hypocycloïde.

L'ensemble de pivotement peut comprendre un dispositif de centrage pour centrer le plateau supérieur sur le premier axe par rapport au plateau inférieur.

Le plateau supérieur peut ainsi être assemblé au plateau inférieur de manière centrée sur le premier axe, sans qu'il soit nécessaire de mettre en oeuvre une opération de centrage. Un tel ensemble de pivotement autocentré est plus rapide à mettre en oeuvre.

L'ensemble de pivotement peut comprendre au moins un flasque relié solidairement au plateau supérieur, ledit au moins un flasque comprenant une première paroi présentant une forme générale cylindrique, de préférence de section en arc de cercle, autour du premier axe. Le dispositif de centrage peut être formé par la première paroi dudit au moins un flasque.

La première paroi dudit au moins un flasque peut être radialement en vis-à-vis d'une face radialement externe du plateau inférieur. La première paroi dudit au moins un flasque peut faire office de paroi de guidage pour le pivotement du plateau supérieur par rapport au plateau inférieur.

L'ensemble de pivotement peut comprendre n flasques avec n un entier pair supérieur ou égal à 2, les flasques étant diamétralement opposés deux à deux par rapport au premier axe, la première paroi de chaque flasque ayant une section en arc de cercle. La section en arc de cercle de chaque flasque peut s'étendre angulairement sur une plage comprise entre 25° et 35°. L'ensemble de pivotement est ainsi plus compact.

L'ensemble de pivotement peut comprendre un dispositif de rétention pour retenir le plateau supérieur au plateau inférieur selon la direction du premier axe.

Un dispositif de rétention permet d'empêcher le soulèvement du plateau supérieur en cas d'accident, et donc de maintenir la cohésion du siège même en cas de choc important subi.

Ledit au moins un flasque peut comprendre un premier rebord faisant saillie de la première paroi radialement vers l'intérieur par rapport au premier axe, une portion périphérique du plateau inférieur étant intercalée selon la direction du premier axe entre le premier rebord dudit au moins un flasque et le plateau supérieur pour former le dispositif de rétention.

Ledit au moins un flasque peut comprendre un second rebord s'étendant de la première paroi radialement vers l'extérieur par rapport au premier axe. Le deuxième rebord dudit au moins un flasque peut être fixé au plateau supérieur, par exemple par au moins un rivet.

La première paroi dudit au moins un flasque peut s'étendre selon la direction du premier axe entre une extrémité inférieure et une extrémité supérieure. Le premier rebord peut être en saillie de l'extrémité inférieure de la première paroi. Le deuxième rebord peut être en saille de l'extrémité supérieure de la première paroi.

Selon un deuxième aspect, qui peut être considéré indépendamment du premier aspect et dans lequel le faisceau électrique peut être omis, il est proposé un ensemble pour siège de véhicule comprenant le plateau inférieur configuré pour être relié à un plancher de véhicule, le plateau supérieur monté pivotant par rapport au plateau inférieur autour d'un premier axe et un dispositif de guidage annulaire comprenant une pluralité d'organes de roulement interposés entre le plateau inférieur et le plateau supérieur et situés à distance du premier axe, et dans lequel il est prévu un système d'ajustement adapté pour régler la distance selon la direction du premier axe entre le plateau inférieur et le plateau supérieur, notamment radialement au niveau des organes de roulement.

Le système d'ajustement permet d'éviter un jeu entre les organes de roulement et l'un et/ou l'autre des plateaux à l'origine de bruit ou d'éviter un écrasement des organes de roulement dans la direction du premier axe entre le plateau supérieur et le plateau inférieur.

Le système d'ajustement peut comprendre une première paroi tubulaire autour du premier axe solidaire directement ou indirectement du plateau inférieur et une deuxième paroi tubulaire autour du premier axe solidaire directement ou indirectement du plateau supérieur, l'une parmi la première paroi tubulaire et la deuxième paroi tubulaire étant au moins en partie reçue par complémentarité de forme dans l'autre parmi la première paroi tubulaire et la deuxième paroi tubulaire.

La première paroi tubulaire et la deuxième paroi tubulaire peuvent être chacune cylindriques de révolution.

La première paroi tubulaire et la deuxième paroi tubulaire peuvent être aptes à coulisser l'une par rapport à l'autre selon la direction du premier axe avant leur solidarisation, permettant ainsi le réglage de la distance selon la direction du premier axe entre le plateau inférieur et le plateau supérieur. À cet effet, l'ajustement entre la première paroi tubulaire et la deuxième paroi tubulaire peut être avec un jeu, de préférence faible. La première paroi tubulaire et la deuxième paroi tubulaire peuvent être aptes à coulisser l'une par rapport à l'autre dans une configuration intermédiaire de l'ensemble de pivotement.

Dans une configuration assemblée et finale de l'ensemble de pivotement, la première paroi tubulaire peut être reliée solidairement à la deuxième paroi tubulaire, notamment par soudure.

Selon un premier mode de réalisation, il peut être prévu une articulation à un seul étage telle que décrit en référence au premier aspect.

En particulier, l'ensemble selon le premier mode de réalisation du deuxième aspect peut comprendre le mécanisme d'articulation, continu ou discontinu, tel que décrit ci-avant relativement au premier aspect. Le mécanisme d'articulation peut être interposé entre le plateau inférieur et le plateau supérieur et par l'intermédiaire duquel le plateau supérieur est monté pivotant par rapport au plateau inférieur autour du premier axe, le mécanisme d'articulation étant agencé au niveau d'une zone centrale centrée sur le premier axe. Le mécanisme d'articulation peut comprendre un premier flasque et un deuxième flasque. Le premier flasque du mécanisme d'articulation peut être solidaire directement ou indirectement du plateau inférieur et le deuxième flasque du mécanisme d'articulation peut être solidaire directement ou indirectement du plateau supérieur.

Selon le premier mode de réalisation, le système d'ajustement peut être interposé entre le mécanisme d'articulation et un premier plateau parmi le plateau inférieur et le plateau supérieur. Selon une première possibilité, le système d'ajustement peut être interposé entre le plateau inférieur et le premier flasque. Selon une seconde possibilité, le système d'ajustement peut être interposé entre le plateau supérieur et le deuxième flasque.

La première paroi tubulaire peut être reliée au premier plateau parmi le plateau inférieur et le plateau supérieur. Par « reliée », il est entendu que la première paroi tubulaire peut être fixée par tout moyen de fixation adapté ou venue de matière avec le premier plateau. La deuxième paroi tubulaire peut être reliée au flasque du mécanisme d'articulation qui est solidaire du premier plateau. Par « reliée », il est entendu que la deuxième paroi tubulaire peut être fixée partout moyen de fixation adapté ou venue de matière avec le flasque correspondant.

Selon une réalisation préférée du premier mode de réalisation, le système d'ajustement peut comprendre un organe annulaire qui comprend la deuxième paroi tubulaire. L'organe annulaire peut être fixé au flasque correspondant du mécanisme d'articulation, notamment par tout moyen de fixation adapté, de préférence par soudure. L'organe annulaire peut comprendre un rebord annulaire s'étendant radialement vers l'intérieur depuis la deuxième paroi tubulaire. Le rebord peut être relié, de préférence par soudure, au flasque correspondant du mécanisme d'articulation. La deuxième paroi tubulaire peut en tout ou partie entourer le mécanisme d'articulation.

La solidarisation de la première paroi tubulaire et de la deuxième paroi tubulaire permet la solidarisation du premier plateau au flasque correspondant du mécanisme d'articulation.

Selon un deuxième mode de réalisation, il peut être prévu une articulation à double étage telle que décrit en référence au premier aspect.

En particulier, l'ensemble selon le deuxième mode de réalisation du deuxième aspect peut comprendre un premier mécanisme d'articulation et un deuxième mécanisme d'articulation, tous deux continus, tels que décrits ci-avant relativement au premier aspect. Les mécanismes d'articulations peuvent être agencés en série en étant interposés entre le plateau inférieur et le plateau supérieur et par l'intermédiaire desquels le plateau supérieur est monté pivotant par rapport au plateau inférieur autour du premier axe. Les mécanismes d'articulation peuvent être agencés au niveau d'une zone centrale centrée sur le premier axe. Les mécanismes d'articulation peuvent comprendre chacun un premier flasque et un deuxième flasque. Le premier flasque du premier mécanisme d'articulation peut être solidaire directement ou indirectement du plateau inférieur et le deuxième flasque du deuxième mécanisme d'articulation peut être est solidaire directement ou indirectement du plateau supérieur.

Selon le deuxième mode de réalisation, le système d'ajustement peut être interposé entre le plateau inférieur et le premier mécanisme d'articulation ou entre le plateau supérieur et le deuxième mécanisme d'articulation. Selon une première possibilité, le système d'ajustement peut être interposé entre le plateau inférieur et le premier flasque du premier mécanisme d'articulation. Selon une seconde possibilité, le système d'ajustement peut être interposé entre le plateau supérieur et le deuxième flasque du deuxième mécanisme d'articulation.

Selon un troisième mode de réalisation, il peut être prévu une articulation à double étage telle que décrit en référence au premier aspect.

En particulier, l'ensemble selon le deuxième mode de réalisation du deuxième aspect peut comprendre un premier mécanisme d'articulation et un deuxième mécanisme d'articulation, tous deux continus, tels que décrits ci-avant relativement au premier aspect. Les mécanismes d'articulations peuvent être agencés en série en étant interposés entre le plateau inférieur et le plateau supérieur et par l'intermédiaire desquels le plateau supérieur est monté pivotant par rapport au plateau inférieur autour du premier axe. Les mécanismes d'articulation peuvent être agencés au niveau d'une zone centrale centrée sur le premier axe. Les mécanismes d'articulation peuvent comprendre chacun un premier flasque et un deuxième flasque. Le premier flasque du premier mécanisme d'articulation peut être solidaire directement ou indirectement du plateau inférieur et le deuxième flasque du deuxième mécanisme d'articulation peut être est solidaire directement ou indirectement du plateau supérieur.

Selon le troisième mode de réalisation, le système d'ajustement peut être interposé entre le premier mécanisme d'articulation et le deuxième mécanisme d'articulation.

La première paroi tubulaire peut être reliée au deuxième flasque du premier mécanisme d'articulation. Par « reliée », il est entendu que la première paroi tubulaire peut être fixée par tout moyen de fixation adapté ou venue de matière avec deuxième flasque du premier mécanisme d'articulation. La deuxième paroi tubulaire peut être reliée au premier flasque du deuxième mécanisme d'articulation. Par « reliée », il est entendu que la deuxième paroi tubulaire peut être fixée par tout moyen de fixation adapté ou venue de matière avec le premier flasque du deuxième mécanisme d'articulation. On comprend que dans ce cas, le deuxième flasque du premier mécanisme d'articulation peut être solidaire du premier flasque du deuxième mécanisme d'articulation par l'intermédiaire de la première paroi tubulaire et de la deuxième paroi tubulaire.

Selon une réalisation préférée du troisième mode de réalisation, le système d'ajustement peut comprendre un premier organe annulaire qui comprend la première paroi tubulaire. Le premier organe annulaire peut être fixé au deuxième flasque du premier mécanisme d'articulation, notamment par tout moyen de fixation adapté, de préférence par soudure. Le premier organe annulaire peut comprendre un premier rebord annulaire s'étendant radialement vers l'intérieur depuis la première paroi tubulaire. Le premier rebord peut être relié, de préférence par soudure, au deuxième flasque du premier mécanisme d'articulation.

Selon une réalisation préférée du troisième mode de réalisation, le système d'ajustement peut comprendre un deuxième organe annulaire qui comprend la deuxième paroi tubulaire. Le deuxième organe annulaire peut être fixé au premier flasque du deuxième mécanisme d'articulation, notamment par tout moyen de fixation adapté, de préférence par soudure. Le deuxième organe annulaire peut comprendre un deuxième rebord annulaire s'étendant radialement vers l'intérieur depuis la deuxième paroi tubulaire. Le deuxième rebord peut être relié, de préférence par soudure, au premier flasque du deuxième mécanisme d'articulation.

Les organes de roulement, plus éloignés de l'axe que le mécanisme d'articulation, fournissent un bras de levier important pour contrecarrer des efforts de basculement exercés sur le siège notamment l'application d'un effort horizontal sur le haut du dossier du siège.

Selon une option, les organes de roulement peuvent être des billes. Les billes étant une fourniture standard, on obtient une solution bon marché pour un guidage annulaire de grand diamètre, le cas échéant en utilisant une cage de guidage des billes. Les billes peuvent être maintenues dans une cage annulaire.

Selon une autre option, les organes de roulement peuvent être des galets. Les galets sont chacun montés sur un axe fixé soit sur le plateau inférieur, soit sur le plateau supérieur.

Le plateau inférieur et le plateau supérieur peuvent chacun comprendre une portion annulaire formant une piste de roulement sur laquelle les organes de roulement peuvent rouler.

Il est également proposé un procédé d'assemblage de l'ensemble de pivotement selon le deuxième aspect tel que décrit ci-avant.

Le procédé peut comprendre :
- fournir un ensemble de pivotement tel que décrit ci-avant, dans lequel la première paroi tubulaire et la deuxième paroi tubulaire sont au moins en partie reçues par complémentarité de formes l'une dans l'autre parmi la première paroi tubulaire et la deuxième paroi tubulaire en étant aptes à coulisser l'une par rapport à l'autre selon la direction du premier axe ;
- déplacer le plateau inférieur relativement au plateau supérieur suivant la direction du premier axe par coulissement de la première paroi tubulaire et la deuxième paroi tubulaire l'une par rapport à l'autre pour obtenir une distance selon la direction du premier axe entre le plateau inférieur et le plateau supérieur qui permet un ajustement des organes de roulement entre le plateau inférieur et le plateau supérieur ;
- solidariser la première paroi tubulaire à la deuxième paroi tubulaire, de préférence par soudure.

L'ajustement des organes de roulement entre le plateau inférieur et le plateau supérieur peut être sans serrage selon la direction du premier axe et/ou sans jeu selon la direction du premier axe. Autrement dit, les organes de roulement peuvent être intercalés entre le plateau inférieur et le plateau supérieur peut être sans serrage selon la direction du premier axe et/ou sans jeu selon la direction du premier axe.

Le premier aspect et le deuxième aspect de la présente description peuvent être combinés. La première paroi tubulaire et/ou de la deuxième paroi tubulaire peuvent délimitées, radialement à l'intérieur par rapport au premier axe, ledit logement de l'ensemble de pivotement. Ladite au moins une boucle formée par la portion intermédiaire du faisceau électrique peut être enroulée autour de la première paroi tubulaire et/ou de la deuxième paroi tubulaire.

Il est aussi proposé un siège de véhicule comprenant un ensemble de pivotement tel que décrit et une assise de siège qui comporte une armature d'assise, dans lequel l'armature d'assise de siège est reliée au plateau supérieur, directement ou par l'intermédiaire d'un mécanisme de rehausse.

Le siège peut comprendre un ou plusieurs dispositifs de commande pour commander chacun un dispositif fonctionnel associé à une fonctionnalité, par exemple le réglage de l'inclinaison d'un dossier du siège par rapport à l'assise, une fonction de massage, l'ouverture et/ou la fermeture d'une fenêtre du véhicule dans lequel le siège se situe, allumer et/ou éteindre une lumière du véhicule dans lequel se situe le siège, etc.

Ledit au moins un câble électrique du faisceau électrique peut être destiné à une connexion électrique entre l'un des dispositifs de commande et le dispositif fonctionnel correspondant, voire avec un ordinateur de bord du véhicule. Aussi, ledit au moins un câble électrique du faisceau électrique peut être destiné pour une connexion électrique entre l'un au moins des dispositifs de commande ou fonctionnel avec un organe d'alimentation électrique, tel qu'une batterie électrique.

### Brève description des dessins

D'autres caractéristiques, détails et avantages apparaîtront à la lecture de la description détaillée ci-après, et à l'analyse des dessins annexés, sur lesquels :
La figure 1 comprend les figures 1A et 1B. Les figures 1A et AB représentent un siège à fonction de pivotement vertical selon l'état de la technique connue.
La figure 2 représente une vue en perspective d'un ensemble de pivotement du siège de la figure 1.
La figure 3 représente une vue en perspective d'un premier aspect d'un ensemble de pivotement pour un siège à fonction de pivotement vertical selon la présente description.
La figure 4 représente une vue éclatée en perspective de l'ensemble de pivotement de la figure 3.
La figure 5 représente une autre vue éclatée en perspective de l'ensemble de pivotement de la figure 3.
La figure 6 représente une vue en perspective et en coupe d'un premier mode de réalisation d'un deuxième aspect de l'ensemble de pivotement pour un siège à fonction de pivotement vertical selon la présente description.
La figure 7 représente une vue en perspective et en coupe d'un deuxième mode de réalisation d'un deuxième aspect de l'ensemble de pivotement pour un siège à fonction de pivotement vertical selon la présente description.
La figure 8 représente une vue en coupe d'un détail de l'ensemble de pivotement selon le premier aspect et le deuxième aspect de la présente description.

### Description des modes de réalisation

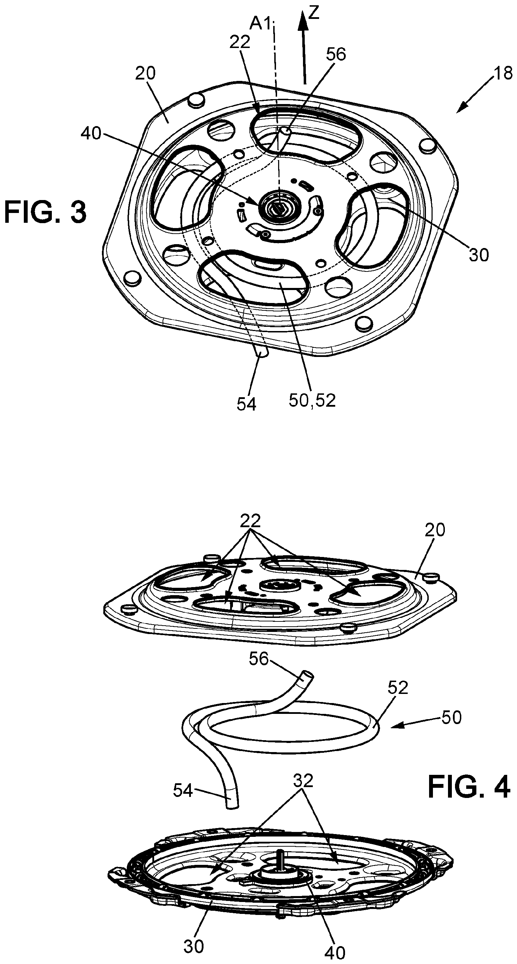

Il est tout d'abord fait référence aux figures 3 à 5 et 8 pour décrire un premier aspect d'un ensemble de pivotement 18 pour un siège 10 de véhicule à fonction de pivotement vertical.

Le siège 10 peut comprendre une assise 12 de siège 10 qui comporte une armature d'assise 12. Le siège 10 peut comprendre un ou plusieurs dispositifs de commande 16 pour commander chacun un dispositif fonctionnel associé à une fonctionnalité, par exemple le réglage de l'inclinaison d'un dossier 14 du siège 10 par rapport à l'assise 12, une fonction de massage, l'ouverture et/ou la fermeture d'une fenêtre du véhicule dans lequel le siège 10 est installé, allumer et/ou éteindre une lumière du véhicule dans lequel est installé le siège 10, etc.

L'ensemble de pivotement 18 comprend un plateau inférieur 30 configuré pour être relié à un plancher de véhicule. Le plateau inférieur 30 peut être configuré pour être relié directement au plancher de véhicule ou indirectement par l'intermédiaire d'un mécanisme de glissières adapté pour déplacer le siège 10 selon une direction longitudinale. Le plateau inférieur 30 comprend une pluralité de premiers trous 32, en l'occurrence quatre premiers trous 32.

L'ensemble de pivotement 18 comprend un plateau supérieur 20 monté pivotant par rapport au plateau inférieur 30 autour d'un premier axe A1. Le pivotement possible du plateau supérieur 20 autour du premier axe A1 par rapport au plateau inférieur 30 peut être au moins égal à 90°, de préférence au moins égale à 180°, et de manière encore plus préférée au moins égale 360° ; dans certaines configurations, on peut obtenir une solution multitours. Le plateau supérieur 20 peut être relié à l'armature d'assise 12 du siège, directement ou par l'intermédiaire d'un mécanisme de rehausse de l'armature d'assise 12. Le plateau supérieur 20 comprend une pluralité de deuxièmes trous 22, en l'occurrence quatre deuxièmes trous 22. Le plateau inférieur 30 et le plateau supérieur 20 sont ici chacun venu de matière, i.e. monoblocs, ce qui facilite l'assemblage de l'ensemble de pivotement 18.

La direction du premier axe A1 coïncide ici avec la direction verticale Z. Les qualificatifs d'orientation « radial » ou « circonférentiel » sont définis sauf précision contraire par référence au premier axe A1. Une direction radiale est une direction perpendiculaire à la direction du premier axe A1. Une direction circonférentielle, en un point éloigné du premier axe A1, correspond à une direction perpendiculaire aux directions du premier axe A1 et radiale. Par ailleurs, sauf précision contraire, les adjectifs « intérieur », « interne », «extérieur» et « externe » sont utilisés en référence à une direction radiale de sorte que la partie intérieure/interne, i.e. radialement intérieure/interne, d'un élément est plus proche du premier axe A1 que la partie extérieure/externe, i.e. radialement extérieure/externe, du même élément.

Le plateau inférieur 30 et le plateau supérieur 20 définissent un logement 28. Le logement 28 est délimité dans la direction du premier axe A1 par le plateau supérieur 20 et le plateau inférieur 30.

L'ensemble de pivotement 18 comprend au moins un mécanisme d'articulation 40 interposé entre le plateau inférieur 30 et le plateau supérieur 20 et par l'intermédiaire duquel le plateau supérieur 20 est monté pivotant par rapport au plateau inférieur 30 autour du premier axe A1. Le mécanisme d'articulation 40 est aussi ici configuré pour bloquer le pivotement du plateau supérieur 20 autour du premier axe A1 par rapport au plateau inférieur 30, lorsqu'il est dans une configuration verrouillée qui peut être la configuration par défaut de repos. En revanche, dans une configuration déverrouillée du mécanisme d'articulation 40, le plateau supérieur 20 peut pivoter autour du premier axe A1 par rapport au plateau inférieur 30, par une action manuelle ou motorisée et par l'intermédiaire du mécanisme d'articulation comme il est décrit plus en détail ci-après. Le mécanisme d'articulation 40 est agencé entre le plateau inférieur 30 et le plateau supérieur 20 suivant la direction du premier axe A1 au niveau d'une zone centrale qui est centrée sur le premier axe A1. L'agencement du mécanisme d'articulation 40 dans la zone centrale du logement permet d'obtenir un siège 10 plus compact. Par ailleurs, un tel agencement s'avère plus robuste. Le mécanisme d'articulation 40 est situé au centre du logement 28. En particulier, le mécanisme délimite radialement à l'intérieur ledit logement 28. Le logement 28 est donc ici annulaire autour du premier axe A1.

De manière remarquable, le mécanisme d'articulation 40 peut être intégralement compris dans un cylindre. Le cylindre contenant le mécanisme d'articulation 40 peut être de révolution autour du premier axe A1 ayant un diamètre inférieur à 120 mm, de préférence un diamètre inférieur à 100mm, voire inférieur à 80mm.

Selon l'exemple illustré aux figures 3 à 5, l'articulation par le mécanisme d'articulation 40 est dite à un seul étage par différence à une articulation à double étage telle que décrite ci-après en référence au deuxième aspect de l'ensemble de pivotement 18 de la présente description. Toutefois, il n'est pas un exclu un mode de réalisation de l'ensemble de pivotement 18 selon le premier aspect dans lequel il est prévu une articulation à double étage.

Le mécanisme d'articulation 40 peut être du type continu ou discontinu. Le mécanisme d'articulation 40 peut comprendre un premier flasque 41 et un deuxième flasque 42. Le premier flasque 41 du mécanisme d'articulation 40 peut être solidaire du plateau inférieur 30 et le deuxième flasque 42 du mécanisme d'articulation 40 peut être est solidaire du plateau supérieur 20.

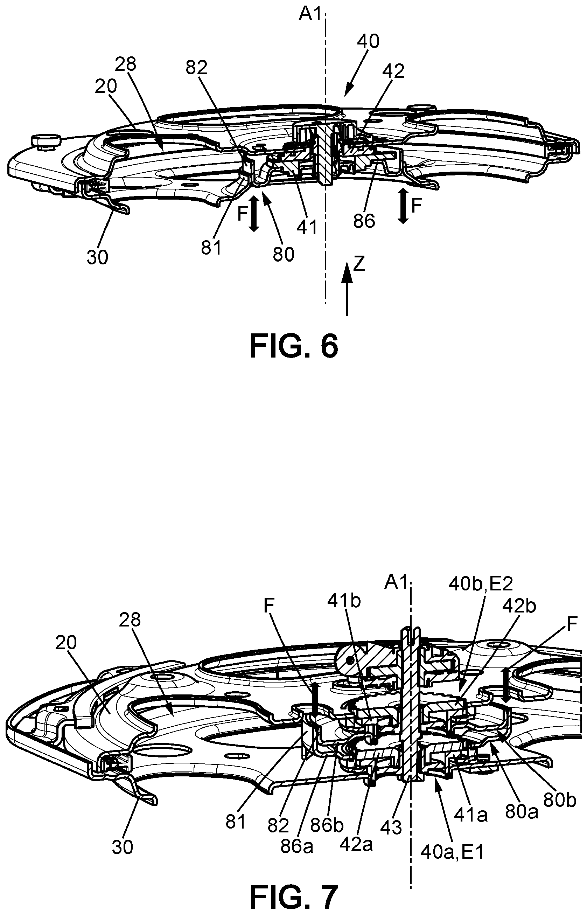

Le premier flasque 41 et le deuxième flasque 42 du mécanisme d'articulation 40 d'une articulation à un seul étage sont plus particulièrement visibles à la figure 6 relative au deuxième aspect de l'ensemble de pivotement 18 qui est décrit plus en détail ci-après.

Le mécanisme d'articulation 40 peut être de type discontinu à grains dentés de verrouillage. Le mécanisme d'articulation 40 peut alors être non motorisé, i.e. à action manuelle. L'ensemble de pivotement 18 peut comprendre une manette de commande de déverrouillage destiné à être manoeuvrée par un utilisateur du siège 10. Ceci forme une solution peu onéreuse et fiable pour proposer un siège 10 à fonction de pivotement vertical. Le premier flasque 41 peut comprendre une première couronne dentée et le deuxième flasque 42 peut comprendre des guides aptes à recevoir et à guider des grains de verrouillage. Les grains de verrouillage peuvent présentés chacun une denture qui se trouve en prise avec la première couronne dentée dans un état de repos du mécanisme d'articulation 40 et qui se trouve éloignée de la première couronne dentée dans un état activé déverrouillé du mécanisme d'articulation 40.

Le mécanisme d'articulation 40 peut être de type continu hypocycloïdal à came excentrique. L'ensemble de pivotement 18 peut comprendre un moteur 70 électrique relié à la came excentrique et configuré pour sélectivement mettre en rotation la came excentrique. Un tel mécanisme d'articulation 40 hypocycloïdal s'avère bon marché, car ils sont produits en grande quantité pour les articulations de dossier 14 à réglage motorisé.

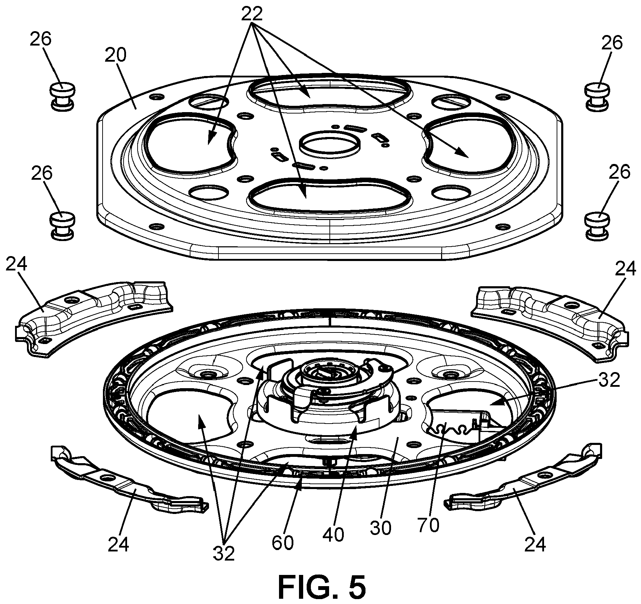

Le moteur 70, visible en partie à la figure 5, peut être positionné en dessous du plateau inférieur 30 et du mécanisme d'articulation 40. Le moteur 70 peut être solidaire du plateau inférieur 30. Moyennant quoi, on peut avoir une épaisseur d'assise 12 modérée, le moteur 70 se trouvant dans une zone technique sous le mécanisme d'articulation 40. Un arbre de sortie 43 du moteur 70 peut être centré sur le premier axe A1.

Selon une disposition particulière, la premier flasque 41 peut comprendre une première couronne dentée laquelle comprenant des premières dents et le deuxième flasque 42 peut comprendre une deuxième couronne dentée laquelle comprenant des deuxièmes dents. La première couronne dentée et la deuxième couronne dentée peuvent en permanence engrenées l'une avec l'autre sur au moins un secteur angulaire sous l'effet de la came excentrique de commande. Les première et deuxième couronnes dentées peuvent ainsi former une interface hypocycloïdale, selon laquelle le centre de la deuxième couronne tournante est déplacé par rapport au centre de la première couronne dentée lorsque la came de commande tourne.

Selon une disposition particulière, il peut être prévu une transmission à principe de joint de Oldham pour rattraper l'effet excentrique engendré par le mécanisme d'articulation 40 à hypocycloïde à came excentrique, la transmission à principe de joint de Oldham étant interposée entre le mécanisme d'articulation 40 et le plateau supérieur 20.

Avantageusement, le mécanisme d'articulation 40 peut être non réversible, à savoir un couple important exercé entre les premiers et deuxièmes flasques 41, 42 ne peut pas engendrer un mouvement relatif du premier flasque 41 par rapport au deuxième flasque 42, en l'absence de rotation de la came excentrique provoquée par la rotation du moteur 70. Ainsi, lorsque le moteur 70 n'est pas commandé, même si un couple est exercé sur le siège 10, il ne se produit pas de pivotement du siège 10.

L'ensemble de pivotement 18 comprend en outre un faisceau électrique 50 qui comporte au moins un câble électrique. Il n'est pas exclu que l'ensemble comprenne plusieurs faisceaux électriques tels que celui décrit ci-après. Le faisceau électrique 50 peut comprendre une gaine dans laquelle est reçu le câble électrique. Le câble électrique peut être isolé. Le câble électrique du faisceau électrique 50 peut être destiné à une connexion électrique entre l'un des dispositifs de commande 16 et le dispositif fonctionnel correspondant, voire avec un ordinateur de bord du véhicule dans lequel est monté le siège. Aussi, le câble électrique du faisceau électrique 50 peut être destiné pour une connexion électrique entre l'un au moins des dispositifs de commande 16 ou fonctionnelle avec un organe d'alimentation électrique, tel qu'une batterie électrique disposée par exemple sous le siège 10 ou dans le véhicule dans lequel le siège 10 est monté.

Le faisceau électrique 50 s'étend au travers de l'un des premiers trous 32 du plateau inférieur 30 et au travers de l'un des deuxièmes trous 22 du plateau supérieur 20, une portion intermédiaire 52 du câble électrique étant alors reçue dans logement 28. Une première portion d'extrémité 54 du faisceau est située en dessous du plateau inférieur 30. La première portion d'extrémité 54 débouche du premier trou, ici vers le bas. Une seconde portion d'extrémité 56 du faisceau électrique 50 est située au-dessus du plateau supérieur 20. La seconde portion d'extrémité 56 débouche du deuxième trou, ici vers le haut.

De manière remarquable, la portion intermédiaire 52 du faisceau électrique forme au moins une boucle autour du premier axe A1. En l'espèce, ladite au moins une boucle de la portion intermédiaire 52 du faisceau électrique 50 est enroulée autour du mécanisme d'articulation 40. Le plateau inférieur 30 est configuré pour soutenir ladite au moins une boucle.

L'enroulement de la portion intermédiaire 52 du faisceau électrique 50 autour du premier axe A1 permet d'éviter un cisaillement du faisceau électrique 50 lors de la rotation du plateau supérieur 20 autour du premier axe A1 par rapport au plateau inférieur 30. En effet, lors de la rotation du plateau supérieur 20 autour du premier axe A1 par rapport au plateau inférieur 30, le faisceau électrique 50 peut s'enrouler ou se dérouler selon le sens de rotation du plateau supérieur 20, évitant ainsi un effet de cisaillement sur celui-ci, et notamment sur chacun des câbles électriques qu'il comprend. Une usure prématurée ou un endommagement du faisceau électrique 50 est ainsi évité.

Le fait que la portion intermédiaire 52 de faisceau électrique 50 soit reçue dans le logement permet de maintenir l'enroulement du faisceau électrique 50 autour du premier axe A1. Aussi, de manière remarquable, le logement recevant la portion intermédiaire 52 du faisceau électrique 50 est obtenu en rapportant directement le plateau supérieur 20 au plateau inférieur 30. Autrement dit, le montage de ladite au moins une boucle du faisceau électrique 50 peut être directement obtenue en assemblant uniquement deux éléments que sont le plateau supérieur 20 et le plateau inférieur 30. Un tel ensemble de pivotement 18 est donc avantageusement rapide et facile à assembler.

Selon la configuration d'enroulement du faisceau électrique autour du premier axe A1, celui-ci peut former entre 1 et 5 boucles autour du premier axe A1, de préférence entre 1 et 3 boucles autour du premier axe A1.

Avantageusement, le premier trou 32 et le deuxième trou 22 à travers lesquels s'étend le faisceau électrique sont disposés à distance du premier axe A1. La première portion d'extrémité 54 et la seconde portion d'extrémité 56 sont ainsi à distance du premier axe A1. Cela permet d'éviter une torsion du faisceau électrique 50 lors de la rotation du plateau supérieur 20 autour du premier axe A1 par rapport au plateau inférieur 30. Autrement dit, excentrer la première portion d'extrémité 54 et la seconde portion d'extrémité 56 du premier axe A1 permet de s'assurer que le faisceau ne vrille pas sur lui-même, en particulier à partir de la première portion d'extrémité et de la seconde portion d'extrémité. Selon l'exemple illustré, chaque premier trou 32 et chaque deuxième trou 22 est à distance du premier axe. Ainsi, il est possible de faire passer le faisceau électrique à travers l'un quelconque des premiers trous 32 et l'un quelconque des deuxièmes trous 22. Aussi, le faisceau électrique 50 peut être fixé à un bord latéral du premier trou 32 et/ou à un bord latéral du second trou 22 qu'il traverse. Il a été constaté que cela facilite l'enroulement et le déroulement du faisceau autour du premier lors d'une rotation importante du plateau supérieur 20 par rapport au plateau inférieur 30.

L'ensemble de pivotement 18 comprend quatre flasques 24 diamétralement opposés deux à deux par rapport au premier axe A1. Chaque flasque 24 est relié solidairement au plateau supérieur 20. Chaque flasque 24 comprend une première paroi 24a présentant une forme générale cylindrique ici de section en arc de cercle autour du premier axe A1. La section en arc de cercle de la première paroi de chaque flasque 24 peut s'étendre angulairement sur une plage comprise entre 25° et 35°. La première paroi 24a de chaque flasque 24 est radialement en vis-à-vis d'une face radialement externe du plateau inférieur 30. L'ensemble des premières parois 24a des flasques 24 forme un dispositif de centrage pour centrer le plateau supérieur 20 sur le premier axe A1 par rapport au plateau inférieur 30. Le plateau supérieur 20 peut ainsi être assemblé au plateau inférieur 30 de manière centrée sur le premier axe A1, sans qu'il soit nécessaire de mettre en oeuvre une opération de centrage. Un tel ensemble de pivotement 18 autocentré est plus rapide à mettre en oeuvre. Aussi, la première paroi 24a de chaque flasque 24 peut faire office de paroi de guidage pour le pivotement du plateau supérieur 20 par rapport au plateau inférieur 30.

Chaque flasque comprend un premier rebord 24b faisant saillie de la première paroi 24a radialement vers l'intérieur par rapport au premier axe A1. Une portion périphérique du plateau inférieur 30 est intercalée selon la direction du premier axe A1 entre le premier rebord 24b de chaque flasque 24 et le plateau supérieur 20. Il est ainsi formé un dispositif de rétention pour retenir le plateau supérieur 20 au plateau inférieur 30 selon la direction du premier axe A1. Un dispositif de rétention permet d'empêcher le soulèvement du plateau supérieur 20 en cas d'accident, et donc de maintenir la cohésion du siège 10 même en cas de choc important subi. Le premier rebord 24b est en saillie radialement vers l'intérieur de l'extrémité inférieure de la première paroi 24a.

Chaque flasque 24 comprend enfin un second rebord 24c s'étendant de la première paroi 24a radialement vers l'extérieur par rapport au premier axe A1. Le deuxième rebord 24c de chaque flasque 24 est fixé au plateau supérieur 20, en l'espèce par un rivet 26. Le deuxième rebord 24c est en saillie radialement vers l'extérieur de l'extrémité supérieure de la première paroi 24a.

Il est maintenant fait référence aux figures 6 à 8 pour décrire un deuxième aspect de l'ensemble de pivotement 18 pour le siège 10 de véhicule à fonction de pivotement vertical. Le deuxième aspect de l'ensemble de pivotement 18 peut être considéré indépendamment du premier aspect. Aussi, les éléments relatifs au faisceau électrique, au dispositif de centrage et/ou au dispositif de rétention peuvent être omis dans l'ensemble de pivotement 18 décrit ci-après.

L'ensemble de pivotement 18 selon le deuxième aspect comprend le plateau inférieur 30 configuré pour être relié à un plancher de véhicule, le plateau supérieur 20 monté pivotant par rapport au plateau inférieur 30 autour d'un premier axe A1 et un dispositif de guidage 60 annulaire comprenant une pluralité d'organes de roulement 62 interposés entre le plateau inférieur 30 et le plateau supérieur 20 et situés à distance du premier axe A1.

De manière remarquable vis-à-vis au deuxième aspect de l'ensemble de pivotement 18, celui-ci comprend un système d'ajustement adapté pour régler la distance d1 selon la direction du premier axe A1 entre le plateau inférieur 30 et le plateau supérieur 20, radialement au niveau des organes de roulement 62. Le système d'ajustement permet d'éviter un jeu entre les organes de roulement et l'un et/ou l'autre des plateaux 20, 30 à l'origine de bruit ou d'éviter un écrasement des organes de roulement dans la direction du premier axe A1 entre le plateau supérieur 20 et le plateau inférieur 30.

Le système d'ajustement comprend une première paroi tubulaire 81 autour du premier axe A1 solidaire directement ou indirectement du plateau inférieur 30 et une deuxième paroi tubulaire 82 autour du premier axe A1 solidaire directement ou indirectement du plateau supérieur 20. Selon les exemples représentés aux figures 6 et 7, la deuxième paroi tubulaire 82 est en partie reçue par complémentarité de forme dans la première paroi tubulaire 81. Aussi, dans les exemples représentés aux figures 6 et 7, la première paroi tubulaire et la deuxième paroi tubulaire 82 sont chacune cylindriques de révolution.

La première paroi tubulaire 81 et la deuxième paroi tubulaire 82 sont aptes à coulisser relativement l'une par rapport à l'autre selon la direction du premier axe A1 avant leur solidarisation, permettant ainsi le réglage de la distance d1 selon la direction du premier axe A1 entre le plateau inférieur 30 et le plateau supérieur 20. À cet effet, l'ajustement entre la première paroi tubulaire 81 et la deuxième paroi tubulaire 82 peut être avec un jeu, de préférence faible. La première paroi tubulaire 81 et la deuxième paroi tubulaire 82 sont aptes à coulisser relativement l'une par rapport à l'autre dans une configuration intermédiaire de l'assemblage l'ensemble de pivotement 18. Dans une configuration assemblée et finale de l'ensemble de pivotement 18, la première paroi tubulaire 81 est reliée solidairement à la deuxième paroi tubulaire 82, de préférence par soudure.

La figure 6 représente un premier mode de réalisation du deuxième aspect de l'ensemble de pivotement 18. Dans le premier mode de réalisation, il est prévu une articulation à un seul étage telle que décrite vis-à-vis du premier aspect de l'ensemble de pivotement 18.

En particulier, comme décrit ci-avant, l'ensemble selon le premier mode de réalisation du deuxième aspect comprend le mécanisme d'articulation 40, continu ou discontinu. Le mécanisme d'articulation 40 est interposé entre le plateau inférieur 30 et le plateau supérieur 20. le plateau supérieur 20 est monté pivotant par rapport au plateau inférieur 30 autour du premier axe A1 par l'intermédiaire du mécanisme d'articulation 40, le mécanisme d'articulation 40 étant agencé au niveau d'une zone centrale centrée sur le premier axe A1. Le mécanisme d'articulation 40 comprend un premier flasque 41 et un deuxième flasque 42. Le premier flasque 41 du mécanisme d'articulation 40 peut être solidaire directement ou indirectement du plateau inférieur 30 et le deuxième flasque 42 du mécanisme d'articulation 40 peut être solidaire directement ou indirectement du plateau supérieur 20.

Dans le premier mode de réalisation, tel qu'illustré à la figure 6 selon une première possibilité, le système d'ajustement est interposé entre le mécanisme d'articulation 40 et le plateau inférieur 30. Plus particulièrement, le système d'ajustement est interposé entre le plateau inférieur 30 et le premier flasque 41.

La première paroi tubulaire 81 est venue de matière avec le plateau inférieur 30. La deuxième paroi tubulaire 82 est reliée au premier flasque 41. Pour ce faire, le système d'ajustement comprend un organe annulaire 80 qui comprend la deuxième paroi tubulaire 82. L'organe annulaire 80 est fixé au premier flasque 41 du mécanisme d'articulation, de préférence par soudure. À cet égard, l'organe annulaire 80 comprend un rebord 86 annulaire s'étendant radialement vers l'intérieur depuis la deuxième paroi tubulaire 82. Le rebord 86 est relié, de préférence par soudure, au premier flasque 41 du mécanisme d'articulation 40.

La solidarisation de la première paroi tubulaire 81 et de la deuxième paroi tubulaire 82 permet la solidarisation du plateau inférieur 30 au premier flasque 41 du mécanisme d'articulation 40.

La figure 7 représente un deuxième mode de réalisation du deuxième aspect de l'ensemble de pivotement 18. Dans le deuxième mode de réalisation, il est prévu une articulation à double étage.

Dans une articulation à double étage, il est prévu un premier étage d'articulation E1 et un deuxième étage d'articulation E2 comprenant respectivement un premier mécanisme d'articulation 40a et deuxième mécanisme d'articulation 40b, chacun étant de type continu hypocycloïdal tel que décrit ci-avant en référence à une articulation à un seul étage.

Le premier mécanisme d'articulation 40a et le deuxième mécanisme d'articulation 40b sont agencés en série en étant interposés entre le plateau inférieur 30 et le plateau supérieur 20 et par l'intermédiaire desquels le plateau supérieur 20 est monté pivotant par rapport au plateau inférieur 30 autour du premier axe A1. Les mécanismes d'articulation 40a, 40b sont ici aussi agencés au niveau d'une zone centrale centrée sur le premier axe A1. Les mécanismes d'articulation 40a, 40b comprennent chacun un premier flasque 41 et un deuxième flasque 42. Le deuxième flasque 42a du premier mécanisme d'articulation 40a est solidaire du premier flasque 41b du deuxième mécanisme d'articulation 40b. Aussi, le premier flasque 41a du premier mécanisme d'articulation 40a est solidaire du plateau inférieur 30 et le deuxième flasque 42b du deuxième mécanisme d'articulation 42 est solidaire du plateau supérieur 20.

Le deuxième mécanisme d'articulation 40b peut être configuré pour rattraper l'effet excentrique du premier mécanisme d'articulation 40a. En d'autres termes, l'effet excentrique du deuxième mécanisme d'articulation 40b est déphasé de 180° autour du premier A1 par rapport à l'effet excentrique du premier mécanisme d'articulation 40a. Moyennant quoi, le siège 10 peut tourner selon un mouvement parfaitement circulaire sans effet parasite excentrique ou hypocycloïdal. Le premier mécanisme d'articulation 40a peut être couplé à un arbre moteur 43 d'un moteur.

Dans le deuxième mode de réalisation, le système d'ajustement est interposé entre le premier mécanisme d'articulation 40a et le deuxième mécanisme d'articulation 40b.

La première paroi tubulaire 81 est reliée au deuxième flasque 42a du premier mécanisme d'articulation 40a. La deuxième paroi tubulaire 82 est reliée au premier flasque 41b du deuxième mécanisme d'articulation 40b. On comprend que dans ce cas, le deuxième flasque 42a du premier mécanisme d'articulation 40a est rendu solidaire du premier flasque 41b du deuxième mécanisme d'articulation 40b par l'intermédiaire de la première paroi tubulaire 81 et de la deuxième paroi tubulaire 82 lorsque celles-ci sont solidarisées l'une à l'autre. Aussi, la première paroi tubulaire 81 est solidaire du plateau inférieur 30 dans la direction du premier axe A1 par l'intermédiaire du premier mécanisme d'articulation 40a et la deuxième paroi tubulaire 82 est solidaire du plateau supérieur 20 dans la direction du premier axe A1 par l'intermédiaire du deuxième mécanisme d'articulation 82.

Comme visible à la figure 7, le système d'ajustement comprend un premier organe annulaire 80a qui comprend la première paroi tubulaire 81. Le premier organe annulaire 80a est fixé au deuxième flasque 42a du premier mécanisme d'articulation 40a, de préférence par soudure. Pour ce faire, le premier organe annulaire 80a comprend un premier rebord 86a annulaire s'étendant radialement vers l'intérieur depuis la première paroi tubulaire 81. Le premier rebord 86a est relié, de préférence par soudure, au deuxième flasque 42a du premier mécanisme d'articulation 40a.

Le système d'ajustement comprend encore ici un deuxième organe annulaire 80b qui comprend la deuxième paroi tubulaire 82. Le deuxième organe annulaire 80a est fixé au premier flasque 41b du deuxième mécanisme d'articulation 40b, de préférence par soudure. Pour ce faire, le deuxième organe annulaire 80b comprend un deuxième rebord 86b annulaire s'étendant radialement vers l'intérieur depuis la deuxième paroi tubulaire 82. Le deuxième rebord 86b est relié, de préférence par soudure, au premier flasque 41b du deuxième mécanisme d'articulation 40b.

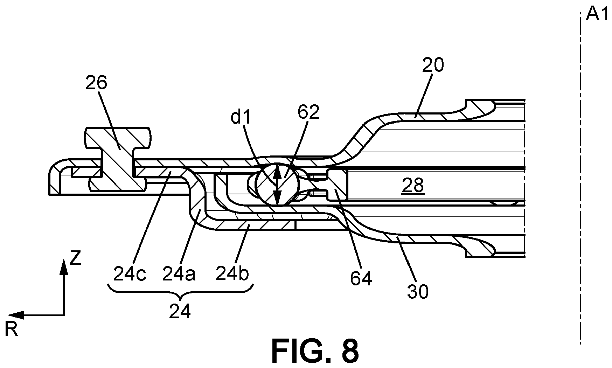

Par ailleurs, les organes de roulement 62, plus éloignés de l'axe que le mécanisme d'articulation 40, fournissent un bras de levier important pour contrecarrer des efforts de basculement exercés sur le siège 10 notamment l'application d'un effort horizontal sur le haut du dossier 14 du siège 10. Selon l'exemple illustré à la figure 8 compatible avec le premier et le deuxième mode de réalisation, les organes de roulement 62 sont ici des billes. Les billes étant une fourniture standard, on obtient une solution bon marché pour un guidage annulaire de grand diamètre, le cas échéant en utilisant une cage de guidage des billes. Les billes peuvent être maintenues dans une cage annulaire 64. Le plateau inférieur 30 et le plateau supérieur 20 comprennent une portion annulaire formant une piste de roulement sur laquelle les organes de roulement peuvent rouler. La distance d1 selon la direction du premier axe sépare ici la piste de roulement du plateau inférieur 30 à la piste de roulement du plateau supérieur 20. D'autres types d'organes de roulement sont envisageables.

Il est maintenant décrit un procédé d'assemblage de l'ensemble de pivotement 18 selon le deuxième aspect tel que décrit ci-avant.

Le procédé comprend une première étape. La première étape comprend la fourniture d'un ensemble de pivotement 18 tel que décrit ci-avant, dans lequel la première paroi tubulaire 81 et la deuxième paroi tubulaire 82 sont au moins en partie reçues par complémentarité de forme l'une dans l'autre parmi la première paroi tubulaire 81 et la deuxième paroi tubulaire 82 en étant aptes à coulisser l'une par rapport à l'autre selon la direction du premier axe A1. Autrement dit, la première paroi tubulaire et la deuxième paroi tubulaire ne sont pas solidaires l'une par rapport à l'autre les rendant ainsi aptes à coulisser l'une par rapport à l'autre. Il s'agit de la configuration intermédiaire de l'ensemble de pivotement 18.

Le procédé comprend une deuxième étape. La deuxième étape comprend le déplacement du plateau inférieur 30 relativement au plateau supérieur 20 suivant la direction du premier axe A1 par coulissement de la première paroi tubulaire 81 et la deuxième paroi tubulaire 82 l'une par rapport à l'autre (représenté par les flèches F aux figures 6 et 7) pour obtenir une distance d1 selon la direction du premier axe A1 entre le plateau inférieur 30 et le plateau supérieur 20 qui permet un ajustement des organes de roulement 62 entre le plateau inférieur 30 et le plateau supérieur 20.

L'ajustement des organes de roulement 62 entre le plateau inférieur 30 et le plateau supérieur 20 peut être sans serrage selon la direction du premier axe et/ou sans jeu selon la direction du premier axe. Autrement dit, les organes de roulement 62 peuvent être intercalés entre le plateau inférieur 30 et le plateau supérieur 20 peut être sans serrage selon la direction du premier axe et/ou sans jeu selon la direction du premier axe. De manière remarquable, le réglage de la distance d1 entre le plateau inférieur 30 et le plateau supérieur 20 est rapide et simple.

Le procédé comprend une troisième étape. La troisième étape comprend la solidarisation de la première paroi tubulaire 81 à la deuxième paroi tubulaire 82, de préférence par soudure. Après la troisième étape, l'ensemble de pivotement est dans la configuration assemblée et finale.

L'invention ne se limite pas aux seuls exemples décrits précédemment et est susceptible de nombreuses variantes.

En particulier, le premier aspect de l'ensemble de pivotement 18 et le deuxième aspect de l'ensemble de pivotement 18 peuvent être combinés en tout ou partie.

Par exemple, la première paroi tubulaire 81 et/ou de la deuxième paroi tubulaire 82 peuvent délimitées, radialement à l'intérieur par rapport au premier axe A1, le logement 28 de l'ensemble de pivotement 18. Ladite au moins une boucle formée par la portion intermédiaire 52 du faisceau électrique 50 peut être enroulée autour de la première paroi tubulaire 81 et/ou de la deuxième paroi tubulaire 82.

La cage 64 peut délimiter radialement à l'extérieur le logement 28.

## Revendications

1. Ensemble de pivotement (18) pour siège (10) de véhicule comprenant :
- un plateau inférieur (30) configuré pour être relié à un plancher de véhicule, le plateau inférieur (30) comprenant au moins un premier trou (32),
- un plateau supérieur (20) monté pivotant par rapport au plateau inférieur (30) autour d'un premier axe (A1), le plateau supérieur (20) comprenant au moins un deuxième trou (22),
- un logement (28) délimité dans la direction du premier axe (A1) par le plateau supérieur (20) et le plateau inférieur (30),
- au moins un faisceau électrique (50) qui comporte au moins un câble électrique, le faisceau électrique (50) s'étendant au travers dudit au moins un premier trou (32) du plateau inférieur (30) et au travers dudit au moins un deuxième trou (22) du plateau supérieur (20), une portion intermédiaire (52) du câble électrique étant reçue dans ledit logement, ladite portion intermédiaire (52) formant au moins une boucle autour du premier axe (A1), ledit plateau inférieur (30) étant configuré pour soutenir ladite au moins une boucle.

2. Ensemble de pivotement (18) selon la revendication précédente, dans lequel ledit au moins un premier trou (32) et ledit au moins un deuxième trou (22) sont chacun disposés à distance du premier axe (A1).

3. Ensemble de pivotement (18) selon la revendication 1 ou 2, dans lequel le faisceau électrique (50) est fixé à un bord latéral du premier trou (32) et/ou à un bord latéral du second trou (22).

4. Ensemble de pivotement (18) selon l'une quelconque des revendications précédentes, comprenant au moins un mécanisme d'articulation (40) interposé entre le plateau inférieur (30) et le plateau supérieur (20) et par l'intermédiaire duquel le plateau supérieur (20) est monté pivotant par rapport au plateau inférieur (30) autour du premier axe (A1), le mécanisme d'articulation (40) étant agencé entre le plateau inférieur (30) et le plateau supérieur (20) suivant la direction du premier axe (A1) au niveau d'une zone centrale qui est centrée sur le premier axe (A1), ladite au moins une boucle de la portion intermédiaire (52) du faisceau électrique (50) étant enroulée autour du mécanisme d'articulation (40).

5. Ensemble de pivotement (18) selon la revendication précédente, dans lequel le mécanisme d'articulation (40) est configuré pour bloquer le pivotement du plateau supérieur (20) autour du premier axe (A1) par rapport au plateau inférieur (30).

6. Ensemble de pivotement (18) selon l'une quelconque des revendications précédentes, l'ensemble de pivotement (18) comprend un dispositif de centrage pour centrer le plateau supérieur (20) sur le premier axe (A1) par rapport au plateau inférieur (30).

7. Ensemble de pivotement (18) selon la revendication précédente, l'ensemble de pivotement (18) comprenant au moins un flasque (24) relié solidairement au plateau supérieur (20), ledit au moins un flasque (24) comprenant une première paroi (24a) présentant une forme générale cylindrique, de préférence de section en arc de cercle, autour du premier axe (A1), dans lequel le dispositif de centrage est formé par la première paroi (24a) dudit au moins un flasque (24).

8. Ensemble de pivotement (18) selon l'une quelconque des revendications précédentes, l'ensemble de pivotement (18) comprend un dispositif de rétention pour retenir le plateau supérieur (20) au plateau inférieur (30) selon la direction du premier axe (A1).

9. Ensemble de pivotement (18) selon la revendication précédente, la revendication 7 s'appliquant, dans lequel ledit au moins un flasque (24) comprend un premier rebord (24b) faisant saillie de la première paroi (24a) radialement vers l'intérieur par rapport au premier axe (A1), une portion périphérique du plateau inférieur (30) étant intercalée selon la direction du premier axe (A1) entre le premier rebord (24b) dudit au moins un flasque (24) et le plateau supérieur (20) pour former le dispositif de rétention.

10. Siège (10) de véhicule comprenant un ensemble de pivotement (18) selon l'une quelconque des revendications précédentes et une assise (12) de siège (10) qui comporte une armature d'assise (12), dans lequel l'armature d'assise (12) de siège (10) est reliée au plateau supérieur (20), directement ou par l'intermédiaire d'un mécanisme de rehausse.
